# EUROPEAN PATENT SPECIFICATION

(11) **EP 4 265 340 B1**
(45) Date of publication and mention of the grant of the patent: **29.10.2025**
(21) Application number: 22798231.1
(22) Date of filing: 20.10.2022
(51) Int. Cl.: H01M 10/0525, H01M 10/04, B05C 1/08, H01M 50/46, H01M 50/449, H01M 50/403

(54) **DISPENSING AND COATING DEVICE FOR SEPARATOR OF LITHIUM BATTERY**
ABGABE- UND BESCHICHTUNGSVORRICHTUNG FÜR SEPARATOR EINER LITHIUMBATTERIE
DISPOSITIF DE DISTRIBUTION ET DE REVÊTEMENT POUR UN SÉPARATEUR D'UNE BATTERIE AU LITHIUM

(30) Priority: 28.02.2022 CN 202210192239
(43) Date of publication of application: 25.10.2023
(73) Proprietor: SHANGHAI FORESIGHT SMART EQUIPMENT CO., LTD., Shanghai 201712 (CN)
(72) Inventor: ZHANG, NianFu, Shanghai 201712 (CN)
(74) Representative: Bayramoglu et al.
(86) International application number: PCT/CN2022/126345
(87) International publication number: WO 2023/159982

(56) References cited:
- EP-A2- 2 572 883
- WO-A1-2012/027196
- WO-A1-2015/078550
- WO-A1-2021/209281
- CN-A- 101 925 462
- CN-A- 107 649 330
- CN-A- 114 833 017
- CN-A- 115 025 924
- CN-A- 115 069 480
- CN-U- 213 194 316
- CN-U- 217 664 253
- CN-U- 217 691 530
- JP-A- 2011 206 698
- JP-A- 2016 219 100
- JP-A- 2020 185 792

## Description

### TECHNICAL FIELD

The present disclosure relates to the technical field of lithium-ion battery (LIB) separator preparation and in particular to a dispensing device for a LIB separator.

### BACKGROUND

In the manufacturing fields of separators and electrodes in the battery industry, air-permeable films and non-woven fabrics in the sanitary packaging industry, and protective films in the electronic industry, incompletely covered coating layers are formed necessarily by dispensing.

With separator preparation in the battery industry as an example, desirable thermostability and adhesive strength between the separator and the electrode as well as quick charge performance are of importance to the LIB. Through incompletely covered coating adhesive layers, recessed regions at adhesive points without a polymer can implement effective transmission of lithium ions and improve the conductivity of lithium ions on the separator, thereby improving the charge-discharge performance of the LIB and prolonging cycle life of the LIB.

An incompletely covered coating adhesive layer typically used for preparing a LIB separator in the prior art includes a polyvinylidene fluoride-aggregating shrunk coating film and an "island" PVDF spraying film, wherein the polyvinylidene fluoride (PVDF) is a highly non-reactive thermoplastic fluoropolymer. For the polyvinylidene fluoride-aggregating shrunk coating film , with the hydrophobicity of the PVDF, the surface of the separator makes the PVDF is transformed into an aggregate by adjusting the tension of the slurry. Once the slurry contacts the surface of the separator, the aggregate is shrunk quickly to prevent continuity. Due to the adjustment of the slurry, the separator has undesirable stability. For the "island" PVDF spraying film, the PVDF is thrown onto the separator through high-speed rotation to form island structures on the separator so that electrodes are riveted. However, the shape is irregular. Hence, existing incompletely covered coating adhesive layers for preparing the LIB separator are presented with various problems.

As described above, the existing incompletely covered coating adhesive layers for preparing the LIB separator cannot accurately control the size, distance, and aggregation state of the adhesive point, and the resulting discrete adhesive film layer is unfavorable to have control on the production quality and the subsequent roll winding quality. Therefore, the present disclosure provides a solution for preparing an incompletely covered coating separator (which is different from the prior art) to form flat and size-consistent local coating structures, thereby achieving a uniform "point-like" PVDF coating film.

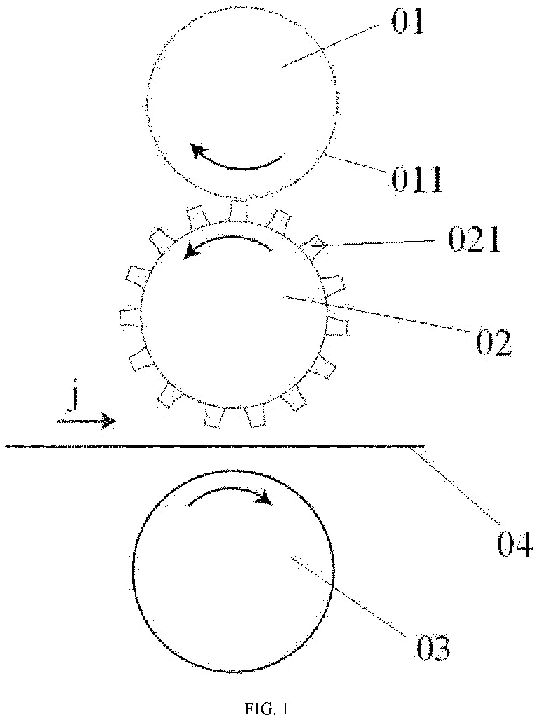

As illustrated in FIG. 1, coating adhesive is fully coated in recesses or grooves 011 on a rolling surface of anilox roll 01, and liquid film layers of a uniform thickness are formed. While protrusions 021 on relief roll 02 make contact with the anilox roll 01, the liquid film layers are transferred to transferring surfaces of the protrusions 021. During the transferring process, the transferring surfaces of the protrusions 021 tangentially contact the rolling surface of the anilox roll 01. At last, a planar bottom roll 03 is used to squeeze the transferring surfaces of the protrusions 021 on the relief roll 02, such that the liquid film layers on the transferring surfaces of the protrusions 021 are transferred to separator 04 which passes through a gap between the planar bottom roll 03 and the relief roll 02 and moves along direction j, and thus uniform "point-like" coating layers are formed at the side of the separator 04, wherein the side facing toward the relief roll 02.

The above solution for preparing the uniform "point-like" dispensing separator can form flat and size-consistent local coating structures on the separator, but only thin liquid film layers can be formed (for example, the thickness of coating films is less than 5 µm). The above solution cannot meet the requirements of thick coating films (for example, the thickness of coating films is greater than 10 µm). In addition, different types of separators require different thicknesses of liquid films. According to the existing solution, the dispensing thicknesses can only be adjusted by replacing different versions of intaglio rolls, which causes a high cost, a troublesome operation, and a waste of time. WO2015/078550A1 discloses a rotary printing method for applying functional coatings to a printed material, and also discloses a coated printed material produced by said method and to the use thereof, in particular in the field of packaging. JP2020185792A discloses a device for measuring elevated areas of surface of rotary body.

### SUMMARY

To prepare thick coating layers on a coating film in the battery field, sanitary packaging industry, and electronic industry, the present disclosure provides a dispensing device for a LIB separator. The dispensing device for a LIB separator includes a coating adhesive transferring device and a planar bottom roll, wherein the coating adhesive transferring device comprises an adhesive accommodating device and a relief roll; accommodating grooves for accommodating adhesives are provided on the adhesive accommodating device; transferring protrusions are arranged on a rolling surface of the relief roll; the transferring protrusions are configured to insert into corresponding ones of the accommodating grooves on the adhesive accommodating device to transfer a separator coating adhesive; the separator coating adhesive forms coating adhesive droplets covering transferring end surfaces of the transferring protrusions; the planar bottom roll rotates reversely relative to the adhesive accommodating device, such that a coating film is driven to move, and the coating adhesive droplets on the transferring protrusions drip onto the coating film to form coating points on the coating film; the planar bottom roll is located under the coating adhesive transferring device; and a film passing gap for allowing the coating film to pass through is provided between the planar bottom roll and the coating adhesive transferring device; the dispensing device comprises a first feed amount controller, a second feed amount controller and an abrasion detection device, wherein the second feed amount controller is configured to detect and control feed amounts by adjusting spacings between the transferring end surfaces of the transferring protrusions and the bottoms of the accommodating grooves according to a coating requirement when the transferring protrusions on the relief roll are inserted into the accommodating grooves on the adhesive accommodating device; and the abrasion detection device is configured to detect abrasion values of the transferring protrusions and send the abrasion values to the first feed amount controller; the first feed amount controller is configured to detect spacings between the transferring protrusions on the relief roll and the planar bottom roll and adjust the spacings between the transferring protrusions on the relief roll and the planar bottom roll according to the coating requirement and an abrasion degree; wherein a depth that the transferring protrusions are inserted into the accommodating grooves is adjusted by adjusting the spacings between the transferring end surfaces of the transferring protrusions and the bottoms of the accommodating grooves according to the coating requirement when the transferring protrusions on the relief roll are inserted into the accommodating grooves on the adhesive accommodating device; a height of the coating adhesive droplets on the transferring protrusions is adjusted by adjusting the depth; and a height of the coating points is adjusted by adjusting the height of the coating adhesive droplets on the transferring protrusions and the spacings between the transferring protrusions on the relief roll and the planar bottom roll.

Preferably, the dispensing device for the LIB separator includes an application device, wherein the application device abuts against the adhesive accommodating device, such that the coating adhesive forms liquid film layers of a uniform thickness on a surface of the adhesive accommodating device.

Preferably, the application device includes a roller or a blade configured to respectively squeeze or scrape the adhesive accommodating device.

Preferably, the adhesive accommodating device includes an anilox roll.

Preferably, ratios Q of inner diameters d1 of the accommodating grooves to diameters d2 of the transferring end surfaces of the transferring protrusions are greater than or equal to 1.5.

Preferably, the transferring end surfaces of the transferring protrusions are circular surfaces; the transferring end surfaces have diameters d2 between 20 µm and 1 mm; and when the transferring protrusions are inserted into the accommodating grooves, the transferring end surfaces and bottoms of the accommodating grooves have spacings L between 20 µm and 250 µm.

Preferably, the transferring protrusions each are a generatrix recessed frustum structure, a generatrix protruded frustum structure, a frustum structure, or a staircase structure.

Preferably, the staircase structure comprises a connecting base and a transferring boss; a cross-sectional area of the transferring boss is less than a cross-sectional area of the connecting base; the transferring boss is a cylindrical structure; the connecting base is a frustum structure; the cylindrical structure has a height h1≤200 µm; and a ratio N of the height h1 of the cylindrical structure to the diameter d2 of each of the transferring end surfaces is less than or equal to 2.5.

Preferably, the coating adhesive droplets drip onto the coating film based on a tension difference between different materials.

Preferably, the relief roll and the coating film are made of the different materials.

Preferably, the coating adhesive droplets further drip onto the coating film under actions of gravities and centrifugal forces.

Preferably, the second feed amount controller includes a grating ruler or other high-precision repeatable positioning devices.

The present disclosure has the following advantages:
When the dispensing device for a LIB separator is used to form the incompletely covered coating layers on the coating film, since the liquid film layers formed by the coating adhesive in the accommodating grooves of the anilox roll have a uniform thickness, thicknesses of the coating layers are stable and uniform. When the coating adhesive is transferred, the transferring protrusions on the relief roll are inserted into the accommodating grooves on the anilox roll, and the coating adhesive is brought out of the accommodating grooves under the action of the tension of the coating adhesive to form the coating adhesive droplets at transferring ends of the transferring protrusions, and thus, the coating adhesive is transferred conveniently. Meanwhile, feed amounts when the transferring protrusions are inserted into the accommodating grooves are adjusted with the feed amount controller according to a coating requirement, which facilitates control of the heights of the coating adhesive droplets and control of the thicknesses of the coating layers. While the coating film moves, the coating adhesive droplets on the transferring protrusions drip onto the coating film, and the coating points are formed on the coating film mainly under the action of the tension difference of the coating adhesive on the relief roll and the coating film made of different materials, which can prevent the coating adhesive droplets from being stressed in coating to reduce the thicknesses of the coating layers, ensures the thicknesses of the coating layers, properly increases areas of the coating points with the coating adhesive at sides of the transferring protrusions and improves coverage rates of the coating layers on the coating film. In the preparation field of the LIB separator, there is no such coating method applied to the production of the LIB separator.

### BRIEF DESCRIPTION OF THE DRAWINGS

FIG. 1 is a schematic view of a preparation device used by a method for preparing incompletely covered coating layers in the prior art;
FIG. 2 is a schematic view for preparing thin incompletely covered coating layers;
FIG. 3 is a schematic view for preparing thick incompletely covered coating layers;
FIG. 4 is a schematic structural view of a dispensing device for a LIB separator according to the present disclosure;
FIG. 5 is a schematic view of a dispensing device including a dispensing control device in dispensing;

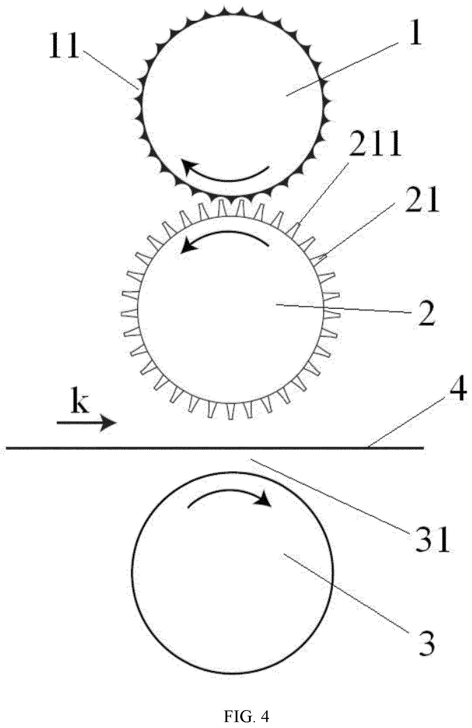

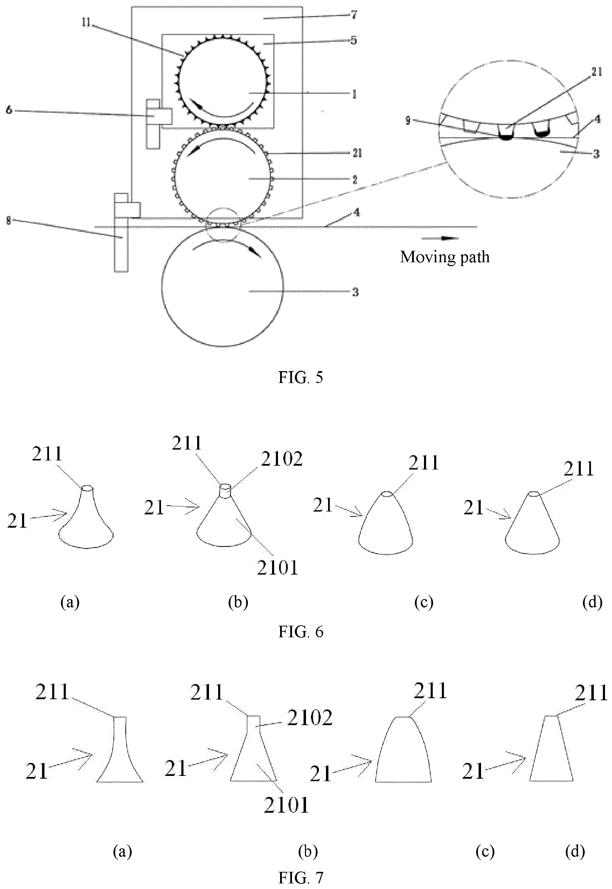

FIG. 6 is a schematic structural view illustrating a transferring protrusion in the dispensing device for a LIB separator in FIG. 4, where FIG. 6(a) is a schematic structural view illustrating a transferring protrusion of a generatrix recessed frustum structure; FIG. 6(b) is a schematic structural view illustrating a transferring protrusion of a generatrix protruded frustum structure; FIG. 6(c) is a schematic structural view illustrating a transferring protrusion of a frustum structure; and FIG. 6(d) is a schematic structural view illustrating a transferring protrusion of a staircase structure;
FIG. 7 is a front view illustrating the transferring protrusion in FIG. 6, where FIG. 7(a) is a front view illustrating a transferring protrusion of a generatrix recessed frustum structure; FIG. 7(b) is a front view illustrating a transferring protrusion of a generatrix protruded frustum structure; FIG. 7(c) is a front view illustrating a transferring protrusion of a frustum structure; and FIG. 7(d) is a front view illustrating a transferring protrusion of a staircase structure;

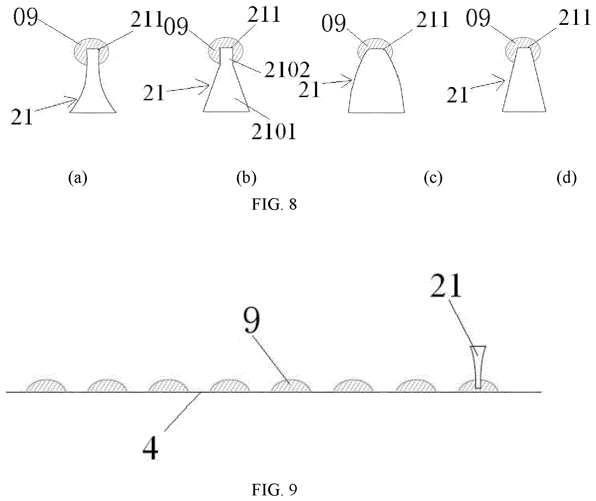

FIG. 8 is a front view illustrating the transferring protrusion having a coating adhesive droplet in FIG. 6, where FIG. 8(a) is a front view illustrating a transferring protrusion of a generatrix recessed frustum structure having a coating adhesive droplet; FIG. 8(b) is a front view illustrating a transferring protrusion of a generatrix protruded frustum structure having a coating adhesive droplet; FIG. 8(c) is a front view illustrating a transferring protrusion of a frustum structure having a coating adhesive droplet; and FIG. 8(d) is a front view illustrating a transferring protrusion of a staircase structure having a coating adhesive droplet; and
FIG. 9 is a schematic view of a coating layer prepared with the dispensing device when a transferring protrusion is a generatrix recessed frustum structure.

In the figures: 01-anilox roll, 011-groove, 02-relief roll, 021-protrusion, 03-planar bottom roll, 04-separator, and 05-coating layer;
1-anilox roll, 11-accommodating groove, 2-relief roll, 3-planar bottom roll, 31-film passing gap, 4-coating film, 5-second micro-adjustment platform, 6-second feed amount controller, 7-first micro-adjustment platform, 8-first feed amount controller, 09-coating adhesive droplet, and 9-coating point; and
21-transferring protrusion, 211-transferring end surface, 2101-connecting base, and 2102-transferring boss.

### DETAILED DESCRIPTION OF THE EMBODIMENTS

As described in the background, the solution for preparing an incompletely covered coating separator researched by the inventor initially can form flat and uniform local coating structures on the separator but can only form thin liquid film layers (e.g., coating films with thicknesses less than 5 µm) and cannot meet preparation requirements of the thick coating film (e.g., coating films with thicknesses greater than 10 µm).

Through repeated experiments and in-depth studies, it is found by the inventor that the initially searched solution for preparing an incompletely covered coating separator mainly follows technical concepts in printing. To form controllable liquid film layers on the transferring surfaces of the protrusions 021 on the relief roll 02 in the transferring process, areas of the transferring surfaces of the protrusions 021 are far greater than those of the recesses or grooves 011 on the anilox roll 01, that is, the areas of the transferring surfaces of the protrusions 021 are far greater than those of the liquid film layers formed in the cells, recesses, or grooves 011 on the anilox roll 01. This is the main reason that the thick coating film cannot be formed easily. More details will be described below.

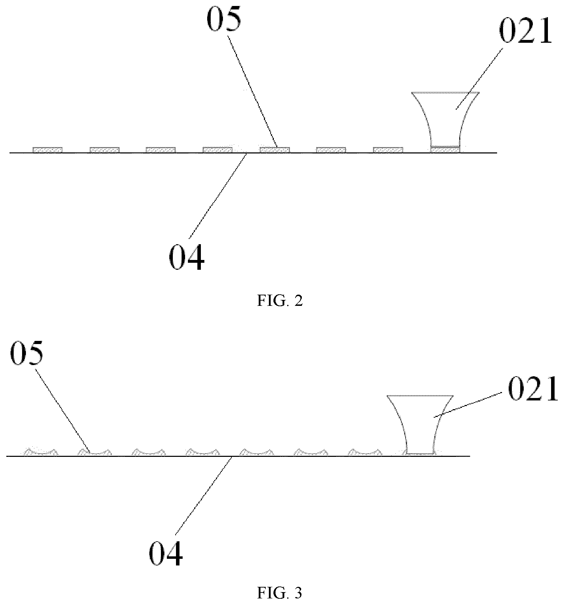

FIGS. 2-3 are schematic views for preparing thin and thick coating layers in research and development. As shown in FIG. 2, when the coating adhesive droplets are dispensed with the protrusions 021, only a small amount of the coating adhesive can be obtained through the protrusions 021. Since areas of the coating adhesive droplets are the same as those of the transferring surfaces of the protrusions 021, only a coating layer 05 having a thickness lesser than 10 µm can be formed on the separator 04. As shown in FIG. 3, since the liquid film layers are transferred to the separator 04 from the relief roll 02 by pressing, the liquid film layers are flattened in the transferring process. Particularly, when the liquid film layers each have a large thickness, such as greater than 5 µm, the coating layers 05 with recesses in the centers are formed on the separator 04 as shown in FIG. 3, and thus the control on thicknesses of the coating layers is tricky or even the coating layers cannot be formed.

It is to be noted that the dispensing solution is not the prior art, but only a specific implementation in the research and development. Therefore, it is unlikely for those skilled in the art to know the above technical problem, that is, the technical problem is unapparent to those skilled in the art.

As described above, concerning the initially searched solution for preparing an incompletely covered coating separator, since the areas of the protrusions on the relief roll are far greater than those of the recesses or grooves on the anilox roll, the protrusions cannot obtain the coating adhesive on the anilox roll unless contacting the anilox roll, the protrusions cannot select the large coating adhesive droplets, and thus only the thin liquid film layers can be formed in dispensing. On the other hand, even though the intaglio roll (anilox roll) is replaced to obtain a larger amount of the coating adhesive, the method for transferring the liquid film layers from the anilox roll to the separator by pressing to form coating adhesive points (or referred to as "coating points") is still difficult to ensure a certain thickness.

Given this, the present disclosure provides a technical solution to solve the above problem. By changing the shapes of the protrusions on the relief roll, the protrusions can be inserted into the grooves on the intaglio roll (anilox roll) to obtain more adhesive. The coating adhesive on the protrusions drips onto the coating film. Coating points are formed on the coating film mainly under the action of the tension difference of the coating adhesive on different materials.

The present disclosure further provides a solution to adjust feed amounts when the protrusions on the relief roll are inserted into the grooves on the intaglio roll (anilox roll) and adjust the spacing between the relief roll and the coating film, thereby controlling thicknesses and shapes of adhesive points dripped by the coating adhesive droplets on the coating film. This solution solves the above-identified problems of different types of separators requiring different thicknesses of liquid films and the dispensing thicknesses can only be adjusted by replacing different versions of intaglio rolls, causing a high cost, a troublesome operation, and a waste of time.

An embodiment of the present disclosure takes dispensing in preparation of a LIB separator as an example for description. It is to be understood by those skilled in the art that the dispensing device and dispensing method in the present disclosure apply to not only the preparation of the LIB separator but also the preparation of relevant film layers in other industries (such as manufacturing field of air-permeable films and non-woven fabrics in the sanitary packaging industry and manufacturing field of protective films in electronic industry).

As shown in FIG. 4, a dispensing device provided by the embodiment of the present disclosure includes anilox roll 1 (adhesive accommodating device), relief roll 2, feed amount controller (not shown in the figure), and planar bottom roll 3. The relief roll 2 is located between the anilox roll 1 and the planar bottom roll 3. The planar bottom roll 3 is located under the relief roll 2. Film passing gap 31 for allowing coating film 4 to pass through is provided between the planar bottom roll 3 and the relief roll 2. Accommodating grooves 11 for accommodating a coating adhesive are provided on a rolling surface of the anilox roll 1. The accommodating grooves 11 are circular and uniformly arranged on the rolling surface of the anilox roll 1. When the coating adhesive is coated on the rolling surface of the anilox roll 1, excess coating adhesive on the rolling surface of the anilox roll 1 can be removed by squeezing or scraping to form liquid film layers (not shown in the figure) of a uniform thickness in anilox cells or grooves. Transferring protrusions 21 are arranged on a rolling surface of the relief roll 2. At a place where the relief roll 2 contacts the anilox roll 1, the transferring protrusions 21 are inserted into corresponding ones of the accommodating grooves 11 on the anilox roll 1. When the coating adhesive is coated on the rolling surface of the anilox roll 1 and the relief roll 2 rotates reversely relative to the anilox roll, the transferring protrusions 21 are inserted into the accommodating grooves 11 to bring the coating adhesive out of the accommodating grooves 11, thereby forming spherical or ellipsoidal coating adhesive droplets 09 at transferring end surfaces 211 of the transferring protrusions 21.

Preferably, when the transferring protrusions 21 on the relief roll 2 are inserted into the accommodating grooves 11 on the anilox roll 1 to transfer the coating adhesive, spacings L between the transferring end surfaces 211 of the transferring protrusions 21 and the bottoms of the accommodating grooves 11 have sizes in the range between 20 µm and 250 µm. When the dispensing device for a LIB separator provided by the present disclosure is used to form incompletely covered coating layers on the coating film, the heights of the coating adhesive droplets 09 on the transferring protrusions 21 can be adjusted with the depths that the transferring protrusions 21 are inserted into the accommodating grooves 11, namely with the spacings L between the transferring end surfaces 211 of the transferring protrusions 21 and the bottoms of the accommodating grooves 11. The heights of the coating adhesive droplets 09 refer to the distances from the coating adhesive droplets 09 furthest away from the transferring end surfaces 211 of the transferring protrusions 21 along central axes of the transferring protrusions 21 to the transferring end surfaces 211. Therefore, the thicknesses of the coating layers are adjusted according to the heights of the coating adhesive droplets 09, which facilitates the control of an operator on the thicknesses of the coating layers.

FIG. 5 illustrates a dispensing control device included in the dispensing device. The dispensing control device mainly includes first micro-adjustment platform 7, first feed amount controller 8, second micro-adjustment platform 5, second feed amount controller 6, abrasion detection device (not shown in the figure), and first and second driving control devices (not shown in the figure). The second driving control device is configured to drive the intaglio roll 1 and the relief roll 2 to rotate reversely, such that the transferring protrusions 21 are sequentially inserted into the accommodating grooves 11 and the coating adhesive is brought out of the accommodating grooves 11 to form the coating adhesive droplets 09 covering the transferring end surfaces 211 of the transferring protrusions. The second feed amount controller 6 is configured to detect feed amounts when the transferring protrusions 21 are inserted into the accommodating grooves 11 for accommodating the coating adhesive and control the second micro-adjustment platform 5 according to a coating requirement to adjust the feed amounts. A second display and storage device (not shown in the figure) displays and stores values of the adjusted feed amounts. The shapes of the coating adhesive droplets 09 correspond to the adjusted feed amounts. The accommodating grooves 11 are provided on the intaglio roll 1 of the dispensing device. The intaglio roll 1 is provided on the second micro-adjustment platform 5. The feed amount controller includes a displacement sensor and a grating ruler. The relief roll 2 of the dispensing device is provided on the first micro-adjustment platform 7. The abrasion detection device is configured to detect abrasion values of the transferring protrusions 21 and send the abrasion values to the first feed amount controller 8. The first feed amount controller 8 is configured to detect spacings between the transferring protrusions 21 on the relief roll 2 and the planar bottom roll 3 and control the movement of the first micro-adjustment platform 7 according to a coating requirement and an abrasion degree to adjust the spacings between the transferring protrusions 21 on the relief roll 2 and the planar bottom roll 3. A first display and storage device (not shown in the figure) displays and stores values of adjusted spacings. The first driving control device is configured to drive the planar bottom roll 3 to rotate reversely relative to the relief roll 2 and drive the coating film 4 to move, such that the coating adhesive droplets 09 that cover the transferring end surfaces 211 of the transferring protrusions 21 is dripped onto the coating film 4 under the action of the tension difference to form coating points 9 on the coating film 4. Shapes of the coating points 9 correspond to the adjusted spacings between the transferring protrusions 21 and the planar bottom roll 3. The shapes of the coating points 9 each define a dimension that is a diameter and/or a height.

It is to be noted that after long-time use, the protrusions on the relief roll will be increased in diameter to affect the dispensing effect of the separator, and if the relief roll is abraded to a certain degree is replaced, the cost is also increased. In the embodiment, by detecting the abrasion degrees of the transferring protrusions and controlling the movement of the first micro-adjustment platform according to the coating requirement and the abrasion degrees to adjust the spacings between the transferring protrusions on the relief roll and the planar bottom roll, the shapes of the coating points on the coating film keep a desirable effect, which prevents the problem of cost increase for replacement arising from abrasions and deviations of the transferring protrusions on the relief roll in the prior art.

The specific process for forming the coating layers on the coating film with the dispensing control device is as follows:
First of all, the intaglio roll 1 and the relief roll 2 are driven to rotate reversely, such that the transferring protrusions 21 are sequentially inserted into the accommodating grooves 11 to bring the coating adhesive out of the accommodating grooves 11. Due to different viscosities and tension differences of the coating adhesive, coating adhesive droplets 09 covering the transferring end surfaces 211 of the transferring protrusions 21 are formed.

Then, feed amounts when the transferring protrusions 21 are inserted into the accommodating grooves 11 for accommodating the coating adhesive are detected and adjusted according to a coating requirement. Values of adjusted feed amounts are displayed and stored. Diameters and heights of the coating adhesive droplets 09 correspond to the adjusted feed amounts. The accommodating grooves 11 are provided on the intaglio roll 1 in the dispensing device.

At last, abrasion values of the transferring protrusions 21 are detected. Spacings between the transferring protrusions 21 on the relief roll 2 in the dispensing device and the planar bottom roll 3 are detected and adjusted according to the coating requirement and the abrasion values. Values B of adjusted spacings are displayed and stored. The coating adhesive droplets 09 that cover the transferring end surfaces 211 of the transferring protrusions 21 are dripped onto the coating film 4 under the action of the tension difference, thereby forming, on the coating film 4, first coating adhesive droplets each having a height between 1 µm and 50 µm and a diameter between 50 µm and 1,000 µm. The diameters and heights of the coating points 9 correspond to spacings between the adjusted transferring protrusions 21 and the planar bottom roll 3.

As shown in FIG. 6, FIG. 7, and FIG. 8, the transferring protrusions 21 each may be a generatrix recessed frustum structure, a generatrix protruded frustum structure, a frustum structure, or a staircase structure. Preferably, the transferring end surfaces 211 of the transferring protrusions 21 are circular surfaces, and diameters d2 of the transferring end surfaces 211 fall into a range between 20 µm and 1 mm. When the dispensing device for a LIB separator is used to form the incompletely covered coating layers on the coating film, transferring of the coating adhesive is not affected by the small or large transferring end surfaces 211 of the transferring protrusions 21, and the coating adhesive on the anilox roll 1 is transferred conveniently. When the transferring protrusion 21 is the staircase structure, the transferring protrusion 21 includes a connecting base 2101 and a transferring boss 2102. The cross-sectional area of the transferring boss 2102 is less than that of the connecting base 2101. The transferring protrusion 21 has a smaller cross-sectional area at the transferring end surface 211, and the cross-sectional area at the transferring end surface 211 of the transferring protrusion 21 is minimal compared with other parts of the transferring protrusion 21, such that the transferring protrusion is conveniently inserted into the accommodating groove 11 when contacting the anilox roll 1 to transfer the coating adhesive on the anilox roll 1.

Preferably, the transferring boss 2102 is a cylindrical structure. The cylindrical structure has a height of h1≤200 µm. A ratio N of the height h1 of the cylindrical structure to the diameter d2 is less than or equal to 2.5. The connecting base 2101 is a frustum structure. By setting the ratio N of the height h1 of the cylindrical transferring boss 2102 to the diameter d2 as being less than or equal to 2.5, neither the transferring effect nor the subsequent coating effect is affected by the elongated transferring boss 2102 when the transferring protrusion 21 transfers the adhesive. In addition, the connecting base 2101 of the frustum structure can effectively support the transferring boss 2102 and facilitate manufacturing. The feed amount controller is configured to detect and control the spacing between the relief roll 2 and the anilox roll 1, thereby controlling the feed amounts when the transferring protrusions 21 on the relief roll 2 are inserted into the accommodating grooves 11 on the anilox roll 1. Preferably, the feed amount controller may be a grating ruler. The grating ruler as the feed amount controller is installed and operated simply and conveniently, has high detection and control precision, and facilitates the control of the operator on the thicknesses of the coating layers. Preferably, ratios Q of inner diameters d1 of the accommodating grooves 11 on the anilox roll 1 to diameters d2 of the transferring end surfaces of the transferring protrusions 21 on the relief roll 2 are greater than or equal to 150%. Areas of the transferring end surfaces of the transferring protrusions 21 are far less than the cross-sectional areas of the accommodating grooves 11, such that the transferring end surfaces of the transferring protrusions 21 are conveniently inserted into the accommodating grooves 11 on the anilox roll 1. With the tension of the coating adhesive, the coating adhesive is attached to the transferring ends of the transferring protrusions to form the spherical or ellipsoidal coating adhesive droplets 09. The coating adhesive droplets 09 do not squeeze the coating film but mainly drip onto the coating film under the action of the tension difference of the coating adhesive droplets 09 on different materials. By adjusting the tension of the coating adhesive and the sizes of the coating adhesive droplets 09, the thicknesses of the coating layers are adjusted, which is simple and convenient.

In addition, the specific process for forming the coating layers on the coating film with the dispensing method in the embodiment of the present disclosure is as follows:
First of all, the coating adhesive is coated in the accommodating grooves 11 on the rolling surface of the anilox roll 1, and the liquid film layers of uniform thickness are formed in the accommodating grooves 11 on the anilox roll 1. Preferably, excess liquid films can be removed by squeezing or scraping the coating adhesive on the rolling surface of the anilox roll 1 through a roller or a blade, thereby forming the liquid film layers of uniform thickness in anilox cells. In response to the roller, a rolling surface of the roller close to the anilox roll 1 contacts and squeezes the coating adhesive on the rolling surface of the anilox roll 1 to remove excess coating adhesive, thereby forming the liquid film layers of the uniform thickness in the anilox cells of the anilox roll 1 with the rotation of the anilox roll 1. In response to the blade, the blade is close to the rolling surface of the anilox roll 1. During the rotation of the anilox roll 1, the blade scrapes the coating adhesive on the rolling surface of the anilox roll 1 to remove excess coating adhesive, thereby forming the liquid film layers of uniform thickness in the anilox cells of the anilox roll 1. Likewise, the anilox roll can also be changed to a smooth roll with a large surface adhesive force or a textured roll. The thicknesses of the liquid film layers are adjusted as required by adjusting the spacing between the roller or the blade and the rolling surface of the smooth roll with the large surface adhesive force or the textured roll, which is simple and convenient.

Then, feed amounts when the transferring protrusions 21 on the relief roll 2 are inserted into the accommodating grooves 11 on the anilox roll 1 are adjusted with the feed amount controller according to a coating requirement, namely the spacings L between the transferring end surfaces 211 of the transferring protrusion 21 and the bottoms of the accommodating grooves 11 are adjusted. A drive device such as a drive motor is used to drive the anilox roll 1 and the relief roll 2 to rotate reversely, such that the transferring protrusions 21 on the relief roll 2 are sequentially inserted into the accommodating grooves 11 on the anilox roll 1 to bring the coating adhesive out of the accommodating grooves 11, thereby forming the coating adhesive droplets 09 covering the transferring end surfaces 211 of the transferring protrusion 21.

At last, the drive device is used to drive the planar bottom roll 3 to rotate reversely relative to the relief roll 2, such that the coating film 4 in the film passing gap 31 is driven to move along a direction k, and the coating adhesive droplets 09 on the transferring protrusions 21 of the relief roll 2 drip onto the coating film 4 to form coating points of the incompletely covered coating layers on the coating film 4. As shown in FIG. 8, when the transferring protrusions 21 on the relief roll 2 are the generatrix recessed frustum structures, semi-ellipsoidal coating points 9 are formed on coating film 4.

When the dispensing device is used to form the coating layers on the coating film, a coating adhesive having a viscosity in the range between 300 Pa·s and 15,000 Pa·s at room temperature is preferred. In this way, when the coating adhesive is transferred, the coating adhesive droplets having heights in the range between 1 µm and 50 µm, and diameters in the range between 50 µm and 1,000 µm can be formed on the transferring protrusion points, thereby forming the thick coating layers.

FIG. 9 is a schematic view of a coating layer prepared with the dispensing device when a transferring protrusion is a generatrix recessed frustum structure. As can be seen from FIG. 9, the transferring protrusion hardly contacts the separator (coating film), and the second coating adhesive droplet 09 is transferred mainly with the tension difference. The first coating adhesive droplet 9 is formed on the separator, and the formed first coating adhesive droplet 9 is approximately spherical or ellipsoidal.

Table 1 illustrates a comparison between the separator produced with the existing process and the separator produced with the method. The island spraying film is prepared by a fourth-generation rotary spraying production device, and the roll coating shrink film is prepared by a third-generation full-coating shrink production device. The parameters are described as follows: 1. A smaller surface density is an indication of a smaller usage of the material. 2. A higher penetration strength is an indication of better strength and a safer battery. 3. A larger conductivity is an indication of a quicker charge-discharge speed. 4. A smaller surface resistance is an indication of smoother penetration of a lithium ion. 5. Air permeability: the time that gas in a unit volume passes through the separator in a unit area; shorter time is an indication of better air permeability.

Table 2 illustrates a comparison between two dispensing technologies.

**Table 1**

| Parameter | Uniform dispensing film (the embodiment) | Roll coating shrink film | Island spraying film |
|---|---|---|---|
| Surface density (g/m²) | 15.01 | 15.85 | 17.15 |
| Penetration strength (N) | 7.43 | 6.95 | 7.2 |
| Ionic conductivity (S/cm) | 12.7*10⁻⁴ | 8.7*10⁻⁴ | 9.1*10⁻⁴ |
| Surface resistance (Ω) | 1.71 | 2.36 | 3.23 |
| Air permeability (s) | 235 | 333 | 286 |

**Table 2**

| | Initially researched coating method | Coating method in the embodiment of the present disclosure |
|---|---|---|
| Coating transferring mechanism | Flexible pressing | Tension difference |
| | The relief roll must contact the separator | Droplets on the protrusions contact the separator or the protrusions contact the separator |
| Performance outcome | Thin coating | Coating is either thin or thick |
| | Recessed island points are formed in middles of the droplets | Spherical droplets are formed when the protrusions do not contact the separator. |
| | | When the protrusions contact the separator, the droplets are similar to those formed by flexible pressing |
| Microscopic view | The area of the boss of the relief roll is far greater than that of the groove | The area of the boss of the relief roll is less than that of the groove (d≥2.5). |

## Claims

1. A dispensing device for a lithium-ion battery (LIB) separator, comprising a coating adhesive transferring device and a planar bottom roll (3), wherein the coating adhesive transferring device comprises an adhesive accommodating device and a relief roll (2); accommodating grooves (11) for accommodating adhesives are provided on the adhesive accommodating device; transferring protrusions (21) are arranged on a rolling surface of the relief roll (2); the transferring protrusions (21) are configured to insert into corresponding ones of the accommodating grooves (11) on the adhesive accommodating device to transfer a separator coating such that the separator coating adhesive forms coating adhesive droplets (09) covering transferring end surfaces (211) of the transferring protrusions (21); the planar bottom roll (3) is configured to rotate reversely relative to the adhesive accommodating device, such that a coating film (4) is driven to move, and the coating adhesive droplets (09) on the transferring protrusions (21) drip onto the coating film (4) to form coating points (9) on the coating film (4); the planar bottom roll (3) is located under the coating adhesive transferring device; and a film passing gap (31) for allowing the coating film (4) to pass through is provided between the planar bottom roll (3) and the coating adhesive transferring device; **characterized in that**
the dispensing device comprises a first feed amount controller (8), a second feed amount controller (6) and an abrasion detection device, wherein
the second feed amount controller (6) is configured to detect and control feed amounts by adjusting spacings between the transferring end surfaces (211) of the transferring protrusions (21) and the bottoms of the accommodating grooves (11) according to a coating requirement when the transferring protrusions (21) on the relief roll (2) are inserted into the accommodating grooves (11) on the adhesive accommodating device; and
the abrasion detection device is configured to detect abrasion values of the transferring protrusions (21) and send the abrasion values to the first feed amount controller (8); the first feed amount controller (8) is configured to detect spacings between the transferring protrusions (21) on the relief roll (2) and the planar bottom roll (3) and adjust the spacings between the transferring protrusions (21) on the relief roll (2) and the planar bottom roll (3) according to the coating requirement and an abrasion degree;
wherein a depth that the transferring protrusions (21) are inserted into the accommodating grooves (11) is adjusted by adjusting the spacings between the transferring end surfaces (211) of the transferring protrusions (21) and the bottoms of the accommodating grooves (11) according to the coating requirement when the transferring protrusions (21) on the relief roll (2) are inserted into the accommodating grooves (11) on the adhesive accommodating device; a height of the coating adhesive droplets (09) on the transferring protrusions (21) is adjusted by adjusting the depth; and a height of the coating points (9) is adjusted by adjusting the height of the coating adhesive droplets (09) on the transferring protrusions (21) and the spacings between the transferring protrusions (21) on the relief roll (2) and the planar bottom roll (3).

2. The dispensing device for the LIB separator according to claim 1, further comprising an application device, wherein the application device abuts against the adhesive accommodating device, such that the coating adhesive forms liquid film layers of a uniform thickness on a surface of the adhesive accommodating device.

3. The dispensing device for the LIB separator according to claim 2, wherein the application device comprises a roller or a blade configured to respectively squeeze or scrape the adhesive accommodating device.

4. The dispensing device for the LIB separator according to claim 1, wherein the adhesive accommodating device comprises an anilox roll (1).

5. The dispensing device for the LIB separator according to claim 1, wherein ratios Q of inner diameters d1 of the accommodating grooves (11) to diameters d2 of the transferring end surfaces (211) of the transferring protrusions (21) are greater than or equal to 1.5.

6. The dispensing device for the LIB separator according to claim 5, wherein the transferring end surfaces (211) of the transferring protrusions (21) are circular surfaces; the transferring end surfaces (211) have diameters d2 between 20 µm and 1 mm; and when the transferring protrusions (21) are inserted into the accommodating grooves (11), the transferring end surfaces (211) and bottoms of the accommodating grooves (11) have spacings L between 20 µm and 250 µm.

7. The dispensing device for the LIB separator according to claim 6, wherein the transferring protrusions (21) each are a generatrix recessed frustum structure, a generatrix protruded frustum structure, a frustum structure, or a staircase structure.

8. The dispensing device for the LIB separator according to claim 7, wherein the staircase structure comprises a connecting base (2101) and a transferring boss (2102); a cross-sectional area of the transferring boss (2102) is less than a cross-sectional area of the connecting base (2101); the transferring boss (2102) is a cylindrical structure; the connecting base (2101) is a frustum structure; the cylindrical structure has a height h1≤200 µm; and a ratio N of the height h1 of the cylindrical structure to the diameter d2 of each of the transferring end surfaces is less than or equal to 2.5.

9. The dispensing device for the LIB separator according to claim 1, wherein the coating adhesive droplets (09) drip onto the coating film based on a tension difference between different materials.

10. The dispensing device for the LIB separator according to claim 9, wherein the relief roll and the coating film are made of the different materials.

11. The dispensing device for the LIB separator according to claim 9, wherein the coating adhesive droplets (09) further drip onto the coating film under actions of gravities and centrifugal forces.

12. The dispensing device for the LIB separator according to any one of claims 1 to 3, wherein the second feed amount controller (6) comprises a grating ruler or other high-precision repeatable positioning devices.

## Patentansprüche

1. Dosiervorrichtung für einen Lithium-Ionen-Batterie(LIB-)Separator, umfassend eine Beschichtungsklebstofftransfervorrichtung und eine planare Unterwalze (3), wobei die Beschichtungsklebstofftransfervorrichtung eine Klebstoffaufnahmevorrichtung und eine Reliefwalze (2) umfasst, Aufnahmerillen (11) zum Aufnehmen von Klebstoffen auf der Klebstoffaufnahmevorrichtung bereitgestellt sind, Transfervorsprünge (21) auf einer Walzfläche der Reliefwalze (2) angeordnet sind, die Transfervorsprünge (21) ausgelegt sind, um in entsprechende der Aufnahmerillen (11) auf der Klebstoffaufnahmevorrichtung eingefügt werden, um eine Separatorbeschichtung zu transferieren, sodass die Separatorbeschichtung Beschichtungsklebstofftröpfchen (09) bildet, die die Transferendflächen (211) der Transfervorsprünge (21) bedecken, die planare Unterwalze (3) ausgelegt ist, um sich gegenläufig relativ zur Klebstoffaufnahmevorrichtung zu drehen, sodass ein Beschichtungsfilm (4) in Bewegung versetzt wird und die Beschichtungsklebstofftröpfchen (09) auf den Transfervorsprüngen (21) auf den Beschichtungsfilm (4) tropfen, um Beschichtungspunkte (9) auf dem Beschichtungsfilm (4) zu bilden, die planare Unterwalze (3) unter der Beschichtungsklebstofftransfervorrichtung befindlich ist und ein Filmdurchgangsspalt (31), um das Durchführen des Beschichtungsfilms (4) zu erlauben, zwischen der planaren Unterwalze (3) und der Beschichtungsklebstofftransfervorrichtung bereitgestellt ist, **dadurch gekennzeichnet, dass**
die Dosiervorrichtung eine erste Zufuhrmengensteuerung (8), eine zweite Zufuhrmengensteuerung (6) und eine Abrieberkennungsvorrichtung umfasst, wobei
die zweite Zufuhrmengensteuerung (6) ausgelegt ist, um Zufuhrmengen durch Einstellen von Abständen zwischen den Transferendflächen (211) der Transfervorsprünge (21) und den Unterseiten der Aufnahmerillen (11) gemäß einer Beschichtungsanforderung zu erkennen, wenn die Transfervorsprünge (21) auf der Reliefwalze (2) in die Aufnahmerillen (11) auf der Klebstoffaufnahmevorrichtung eingefügt sind, und
die Abrieberkennungsvorrichtung ausgelegt ist, um Abriebwerte der Transfervorsprünge (21) zu erkennen und die Abriebwerte an die erste Zufuhrmengensteuerung (8) zu senden, wobei die erste Zufuhrmengensteuerung (8) ausgelegt ist, um Abstände zwischen den Transfervorsprüngen (21) auf der Reliefwalze (2) und der planaren Unterwalze (3) zu erkennen und die Abstände zwischen den Transfervorsprüngen (21) auf der Reliefwalze (2) und der planaren Unterwalze (3) gemäß der Beschichtungsanforderung und einem Abriebgrad zu regeln,
wobei eine Tiefe, in der die Transfervorsprünge (21) in die Aufnahmerillen (11) eingefügt sind, eingestellt wird, indem die Abstände zwischen den Transferendflächen (211) der Transfervorsprünge (21) und den Unterseiten der Aufnahmerillen (11) gemäß der Beschichtungsanforderung eingestellt werden, wenn die Transfervorsprünge (21) auf der Reliefwalze (2) in die Aufnahmerillen (11) auf der Klebstoffaufnahmevorrichtung eingefügt sind, wobei eine Höhe der Beschichtungsklebstofftröpfchen (09) auf den Transfervorsprüngen (21) eingestellt wird, indem die Tiefe eingestellt wird, und eine Höhe der Beschichtungspunkte (9) eingestellt wird, indem die Höhe der Beschichtungsklebstofftröpfchen (09) auf den Transfervorsprüngen (21) und die Abstände zwischen den Transfervorsprüngen (21) auf der Reliefwalze (2) und der planaren Unterwalze (3) eingestellt werden.

2. Dosiervorrichtung für LIB-Separator nach Anspruch 1, ferner umfassend eine Auftragsvorrichtung, wobei die Auftragsvorrichtung an der Klebstoffaufnahmevorrichtung anliegt, sodass der Beschichtungsklebstoff flüssige Filmschichten einer einheitlichen Dicke auf einer Oberfläche der Klebstoffaufnahmevorrichtung bildet.

3. Dosiervorrichtung für LIB-Separator nach Anspruch 2, wobei die Auftragsvorrichtung eine Walze oder ein Messer umfasst, die bzw. das ausgelegt ist, um die Klebstoffaufnahmevorrichtung jeweils zu quetschen oder abzustreifen.

4. Dosiervorrichtung für LIB-Separator nach Anspruch 1, wobei die Klebstoffaufnahmevorrichtung eine Anilox-Rolle (1) umfasst.

5. Dosiervorrichtung für LIB-Separator nach Anspruch 1, wobei Verhältnisse Q von Innendurchmessern d1 der Aufnahmerillen (11) zu Durchmessern d2 der Transferendflächen (211) der Transfervorsprünge (21) größer oder gleich 1,5 sind.

6. Dosiervorrichtung für LIB-Separator nach Anspruch 5, wobei die Transferendflächen (211) der Transfervorsprünge (21) kreisförmige Oberflächen sind, die Transferendflächen (211) Durchmesser d2 zwischen 20 µm und 1 mm aufweisen und die Transferendflächen (211) und die Unterseiten der Aufnahmerillen (11) Abstände L zwischen 20 µm und 250 µm aufweisen, wenn die Transfervorsprünge (21) in die Aufnahmerillen (11) eingefügt sind.

7. Dosiervorrichtung für LIB-Separator nach Anspruch 6, wobei die Transfervorsprünge (21) jeweils eine Kegelstumpfstruktur mit eingesenkter Erzeugenden, eine Kegelstumpfstruktur mit hervorstehender Erzeugenden, eine Kegelstumpfstruktur oder eine Stufenstruktur sind.

8. Dosiervorrichtung für LIB-Separator nach Anspruch 7, wobei die Stufenstruktur eine Verbindungsbasis (2101) und einen Transferzapfen (2102) umfasst, ein Querschnittsbereich des Transferzapfens (2102) kleiner ist als ein Querschnittsbereich der Verbindungsbasis (2101), der Transferzapfen (2102) eine zylindrische Struktur ist, die Verbindungsbasis (2101) eine Kegelstumpfstruktur ist, die zylindrische Struktur eine Höhe h1≤200 µm aufweist und ein Verhältnis N der Höhe h1 der zylindrischen Struktur zum Durchmesser d2 einer jeden der Transferendflächen kleiner oder gleich 2,5 ist.

9. Dosiervorrichtung für LIB-Separator nach Anspruch 1, wobei die Beschichtungsklebstofftröpfchen (09) auf den Beschichtungsfilm basierend auf einer Spannungsdifferenz zwischen unterschiedlichen Materialien tropfen.

10. Dosiervorrichtung für LIB-Separator nach Anspruch 9, wobei die Reliefwalze und der Beschichtungsfilm aus unterschiedlichen Materialien bestehen.

11. Dosiervorrichtung für LIB-Separator nach Anspruch 9, wobei die Beschichtungsklebstofftröpfchen (09) ferner unter Wirkungen von Schwerkräften und Zentrifugalkräften auf den Beschichtungsfilm tropfen.

12. Dosiervorrichtung für LIB-Separator nach einem der Ansprüche 1 bis 3, wobei die zweite Zufuhrmengensteuerung (6) ein Rasterlineal oder andere wiederholbare Hochpräzisionspositionierungsvorrichtungen umfasst.

## Revendications

1. Dispositif de distribution pour un séparateur de batterie au lithium-ion (LIB), comprenant un dispositif de transfert d'adhésif de revêtement et un rouleau inférieur lisse (3), dans lequel le dispositif de transfert d'adhésif de revêtement comprend un dispositif de réception d'adhésif et un rouleau à relief (2) ; des rainures de réception (11) pour recevoir des adhésifs sont prévues sur le dispositif de réception d'adhésif ; des protubérances de transfert (21) sont disposées sur une surface de roulement du rouleau à relief (2) ; les protubérances de transfert (21) sont configurées pour s'insérer dans des rainures correspondantes parmi les rainures de réception (11) sur le dispositif de réception d'adhésif pour transférer un revêtement de séparateur de telle sorte que l'adhésif de revêtement de séparateur forme des gouttelettes d'adhésif de revêtement (09) recouvrant des surfaces d'extrémité de transfert (211) des protubérances de transfert (21) ; le rouleau inférieur lisse (3) configuré pour tourner en sens inverse par rapport au dispositif de réception d'adhésif, de telle sorte qu'un film de revêtement (4) est entraîné en mouvement, et les gouttelettes d'adhésif de revêtement (09) sur les protubérances de transfert (21) s'égouttent sur le film de revêtement (4) pour former des points de revêtement (9) sur le film de revêtement (4) ; le rouleau inférieur lisse (3) est situé sous le dispositif de transfert d'adhésif de revêtement ; et un espace de passage de film (31) pour permettre au film de revêtement (4) de passer à travers est prévu entre le rouleau inférieur lisse (3) et le dispositif de transfert d'adhésif de revêtement ; **caractérisé en ce que**
le dispositif de distribution comprend une première unité de commande de quantité d'alimentation (8), une deuxième unité de commande de quantité d'alimentation (6) et un dispositif de détection d'abrasion, dans lequel
la seconde unité de commande de quantité d'alimentation (6) est configurée pour détecter et commander des quantités d'alimentation en ajustant des espacements entre les surfaces d'extrémité de transfert (211) des protubérances de transfert (21) et les fonds des rainures de réception (11) en fonction d'une spécification de revêtement lorsque les protubérances de transfert (21) sur le rouleau à relief (2) sont insérées dans les rainures de réception (11) sur le dispositif de réception d'adhésif ; et
le dispositif de détection d'abrasion est configuré pour détecter des valeurs d'abrasion des protubérances de transfert (21) et pour envoyer les valeurs d'abrasion vers la première unité de commande de quantité d'alimentation (8) ; la première unité de commande de quantité d'alimentation (8) est configurée pour détecter des espacements entre les protubérances de transfert (21) sur le rouleau à relief (2) et le rouleau inférieur lisse (3) et pour ajuster les espacements entre les protubérances de transfert (21) sur le rouleau à relief (2) et le rouleau inférieur lisse (3) en fonction de la spécification de revêtement et d'un degré d'abrasion ;
dans lequel une profondeur d'insertion des protubérances de transfert (21) dans les rainures de réception (11) est ajustée en ajustant les espacements entre les surfaces d'extrémité de transfert (211) des protubérances de transfert (21) et les fonds des rainures de réception (11) en fonction de la spécification de revêtement lorsque les protubérances de transfert (21) sur le rouleau à relief (2) sont insérées dans les rainures de réception (11) sur le dispositif de réception d'adhésif ; une hauteur des gouttelettes d'adhésif de revêtement (09) sur les protubérances de transfert (21) est ajustée en ajustant la profondeur ; et une hauteur des points de revêtement (9) est ajustée en ajustant la hauteur des gouttelettes d'adhésif de revêtement (09) sur les protubérances de transfert (21) et les espacements entre les protubérances de transfert (21) sur le rouleau à relief (2) et le rouleau inférieur lisse (3).

2. Dispositif de distribution pour le séparateur LIB selon la revendication 1, comprenant en outre un dispositif d'application, dans lequel le dispositif d'application vient en butée contre le dispositif de réception d'adhésif, de telle sorte que l'adhésif de revêtement forme des couches de film liquide d'une épaisseur uniforme sur une surface du dispositif de réception d'adhésif.

3. Dispositif de distribution pour le séparateur LIB selon la revendication 2, dans lequel le dispositif d'application comprend un rouleau ou une lame configuré(e) pour presser ou racler respectivement le dispositif de réception d'adhésif.

4. Dispositif de distribution pour le séparateur LIB selon la revendication 1, dans lequel le dispositif de réception d'adhésif comprend un rouleau anilox (1).

5. Dispositif de distribution pour le séparateur LIB selon la revendication 1, dans lequel les rapports Q des diamètres internes d1 des rainures de réception (11) aux diamètres d2 des surfaces d'extrémité de transfert (211) des protubérances de transfert (21) sont supérieurs ou égaux à 1,5.

6. Dispositif de distribution pour le séparateur LIB selon la revendication 5, dans lequel les surfaces d'extrémité de transfert (211) des protubérances de transfert (21) sont des surfaces circulaires ; les surfaces d'extrémité de transfert (211) présentent des diamètres d2 compris entre 20 µm et 1 mm ; et lorsque les protubérances de transfert (21) sont insérées dans les rainures de réception (11), les surfaces d'extrémité de transfert (211) et les fonds des rainures de réception (11) présentent des espacements L entre 20 µm et 250 µm.

7. Dispositif de distribution pour le séparateur LIB selon la revendication 6, dans lequel chacune des protubérances de transfert (21) est une structure tronconique génératrice renfoncée , une structure tronconique génératrice faisant saillie, une structure tronconique ou une structure en escalier.

8. Dispositif de distribution pour le séparateur LIB selon la revendication 7, dans lequel la structure d'escalier comprend une base de raccordement (2101) et une bosse de transfert (2102) ; une surface de section transversale de la bosse de transfert (2102) est plus petite qu'une surface de section transversale de la base de raccordement (2101) ; la bosse de transfert (2102) est une structure cylindrique ; la base de raccordement (2101) est une structure tronconique ; la structure cylindrique présente une hauteur h1≤200 µm ; et un rapport N de la hauteur h1 de la structure cylindrique au diamètre d2 de chacune des surfaces d'extrémité de transfert est inférieur ou égal à 2,5.

9. Dispositif de distribution pour le séparateur LIB selon la revendication 1, dans lequel les gouttelettes d'adhésif de revêtement (09) s'égouttent sur le film de revêtement sur la base d'une différence de tension entre les différents matériaux.

10. Dispositif de distribution pour le séparateur LIB selon la revendication 9, dans lequel le rouleau à relief et le film de revêtement sont constitués des différents matériaux.

11. Dispositif de distribution pour le séparateur LIB selon la revendication 9, dans lequel les gouttelettes d'adhésif de revêtement (09) s'égouttent davantage sur le film de revêtement par les effets de gravités et de forces centrifuges.

12. Dispositif de distribution pour le séparateur LIB selon l'une quelconque des revendications 1 à 3, dans lequel la deuxième unité de commande de quantité d'alimentation (6) comprend une règle à grille ou d'autres dispositifs de positionnement reproductible de haute précision.
